# EUROPEAN PATENT APPLICATION

(11) **EP 3 771 723 A1**
(43) Date of publication of application: **03.02.2021**
(21) Application number: 19189367.6
(22) Date of filing: 31.07.2019
(51) Int. Cl.: C08G 63/64, C08L 69/00, C08L 83/10, B33Y 10/00, B33Y 80/00, B29C 64/40

(54) **ADDITIVE MANUFACTURING ARTICLE AND METHOD**

(71) Applicant: SHPP Global Technologies B.V., 4612 PX Bergen op Zoom (NL)
(72) Inventor: LEVASALMI, Juha-Matti, Selkirk, NY12158 (US)
(74) Representative: Lang, Johannes

(57) **Abstract**

An additively manufactured article includes a build structure and a support structure contacting the build structure. The build structure includes a build composition containing a block polyestercarbonate-polysiloxane in which the ester units include resorcinol isophthalate and/or resorcinol terephthalate units. The support structure includes a support composition containing a copolycarbonate. The copolycarbonate includes bisphenol A carbonate units and bisphenol isophorone carbonate units have the structure 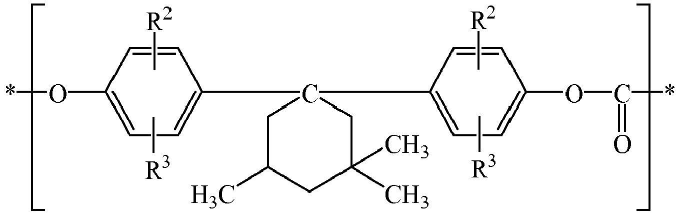 in which R² and R³ can be a hydrogen atom or an alkyl group. Also described is a method of additive manufacturing for preparing the article.

## Description

### BACKGROUND OF THE INVENTION

Fused filament fabrication ("FFF"), also known as fused deposition modeling, is an additive manufacturing technique in which an FFF printer deposits sequential layers of a thermoplastic build material to create a three-dimensional model, also known as a build structure. During printing, each new layer must be supported by the layer beneath it. If the model to be printed requires temporary support to maintain its desired shape (e.g., for an overhang or bridge), the printing of a support structure may be needed to temporarily support the build structure until it cools sufficiently to maintain its shape without support.

In the FFF process, the build material and support material, as feedstocks, are fed to the FFF printer in filament form. These build and support material filaments are then separately heated above their solidification temperatures and extruded through separate nozzles to print the build and support structures. The support structure is subsequently separated from the build structure by physical separation, dissolution, or a combination of the two. Depending on whether physical separation or dissolution is chosen as the primary means of separating the support structure from the build structure, the chemical requirements for the build structure can differ substantially. When the support structure is designed to be dissolved in a solvent, the support material must be highly soluble in the solvent, while the build material must be insoluble. See, for example, United States Patent Application Publication Number US 2019/0143582 A1 of Hungerland et al., published 16 May 2019 (describing a copolycarbonate support material design for separation by dissolution).

It is sometimes desirable to physically separate support structures from build structures in order to avoid the health, safety, and environmental issues associated with solvent use for support dissolution. In such circumstances, the affinity between build and support materials must be sufficient to enable support of the build material during printing but not so great as to interfere with physical separation of the support structure from the build structure or to damage the build structure during that separation. In addition, the build and support materials must be readily extrudable to form high-precision filaments, and be capable of being printed to form complex structures. There is therefore a need for combinations of build and support materials that satisfy these diverse requirements.

### BRIEF SUMMARY OF EMBODIMENTS OF THE INVENTION

One embodiment is an additively manufactured article comprising: a build structure; and a support structure contacting the build structure; wherein the build structure comprises a build composition comprising, based on the total weight of the build composition, 20 to 100 weight percent of a block polyestercarbonate-polysiloxane comprising a polyester block comprising resorcinol ester units having the structure 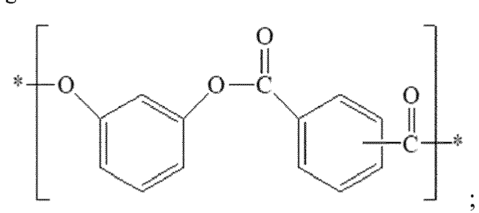 a polycarbonate block comprising carbonate units having the structure 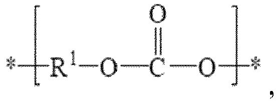 wherein at least 60 percent of the total number of R¹ groups are aromatic divalent groups; and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene, and 5 to 35 mole percent of carbonate units wherein R¹ is 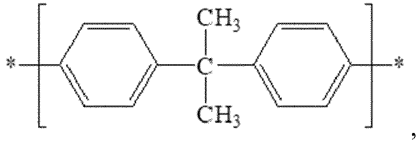 and further comprises, based on the weight of the block polyestercarbonate-polysiloxane, 0.2 to 4 weight percent dimethylsiloxane units; and 0 to 80 weight percent of a block polyestercarbonate comprising a polyester block comprising resorcinol ester units having the structure 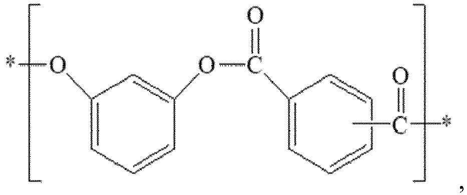 and a polycarbonate block comprising carbonate units having the structure 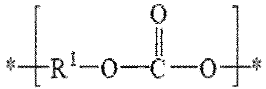 wherein at least 60 percent of the total number of R¹ groups are aromatic divalent groups; wherein the block polyestercarbonate-polysiloxane and the block polyestercarbonate are present in a total amount of greater than 60 weight percent to 100 weight percent, based on the total weight of the build composition; and wherein the block polyestercarbonate-polysiloxane contributes 0.3 to 1.5 weight percent of dimethylsiloxane units to the build composition, based on the total weight of the build composition; and wherein the support structure comprises a support composition comprising a copolycarbonate comprising bisphenol isophorone carbonate units and bisphenol A carbonate units, wherein the bisphenol isophorone carbonate units have the structure 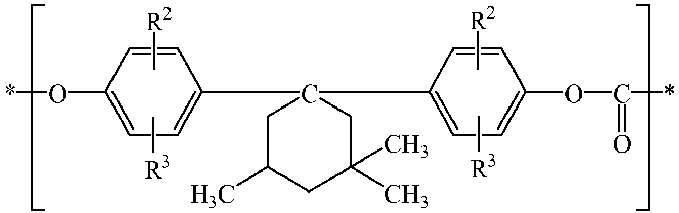 wherein R² and R³ are independently at each occurrence hydrogen or (C₁-C₁₀)-alkyl.

Another embodiment is a method of fused filament fabrication comprising: melting a portion of a first filament to form a first thermally-solidifiable material in molten form, and dispensing the first thermally-solidifiable material in molten form in a predetermined pattern so as to define a build structure; and melting a portion of a second filament to form a second thermally-solidifiable material in molten form, and, in coordination with the dispensing the first thermally solidifiable material, dispensing the second thermally-solidifiable material in molten form so as to define a support structure for (and in contact with) the build structure; wherein the first thermally-solidifiable material comprises a build composition comprising 20 to 100 weight percent of a block polyestercarbonate-polysiloxane comprising a polyester block comprising resorcinol ester units having the structure 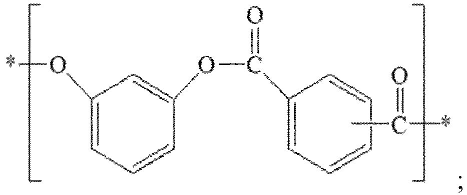 a polycarbonate block comprising carbonate units having the structure 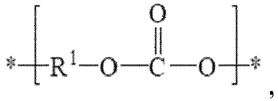 wherein at least 60 percent of the total number of R¹ groups are aromatic divalent groups; and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene, and 5 to 35 mole percent of carbonate units wherein R¹ is 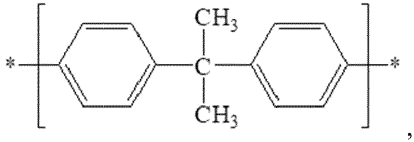 and further comprises, based on the weight of the block polyestercarbonate-polysiloxane, 0.2 to 4 weight percent dimethylsiloxane units; and 0 to 80 weight percent of a block polyestercarbonate comprising a polyester block comprising resorcinol ester units having the structure 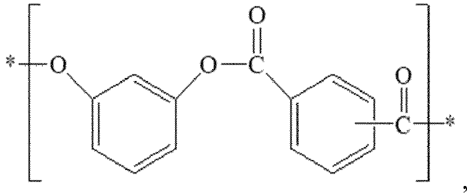 and a polycarbonate block comprising carbonate units having the structure 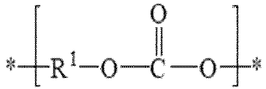 wherein at least 60 percent of the total number of R¹ groups are aromatic divalent groups; wherein the block polyestercarbonate-polysiloxane and the block polyestercarbonate are present in a total amount of greater than 60 weight percent to 100 weight percent, based on the total weight of the build composition; and wherein the block polyestercarbonate-polysiloxane contributes 0.3 to 0.7 weight percent of dimethylsiloxane units to the build composition, based on the total weight of the build composition; and wherein the support structure comprises a support composition comprising a copolycarbonate comprising bisphenol isophorone carbonate units and bisphenol A carbonate units, wherein the bisphenol isophorone carbonate units have the structure 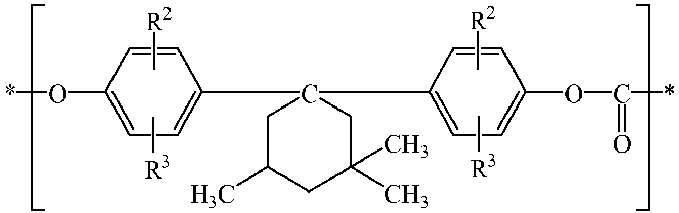 wherein R² and R³ are independently at each occurrence hydrogen or (C₁-C₁₀)-alkyl.

These and other embodiments are described in detail below.

### DETAILED DESCRIPTION OF THE INVENTION

The present inventors have determined that the diverse requirements of filament extrudability, printability, support during printing, and physical separability after printing are provided by a combination of build and support materials in which the build material comprises a particular polyestercarbonate-polysiloxane block copolymer, and the support material comprises a particular copolycarbonate comprising bisphenol isophorone carbonate units and bisphenol A carbonate units. Thus, one embodiment is an additively manufactured article comprising: a build structure; and a support structure contacting the build structure; wherein the build structure comprises a build composition comprising, based on the total weight of the build composition, 20 to 100 weight percent of a block polyestercarbonate-polysiloxane comprising a polyester block comprising resorcinol ester units having the structure 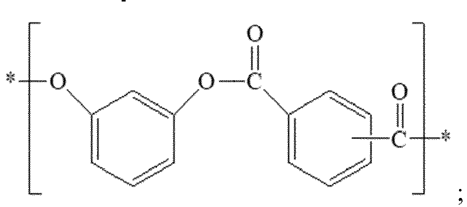 a polycarbonate block comprising carbonate units having the structure 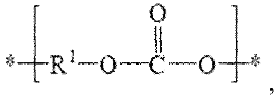 wherein at least 60 percent of the total number of R¹ groups are aromatic divalent groups; and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene, and 5 to 35 mole percent of carbonate units wherein R¹ is 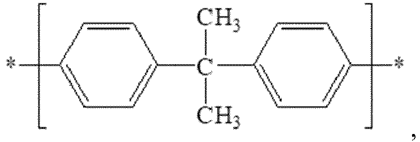 and further comprises, based on the weight of the block polyestercarbonate-polysiloxane, 0.2 to 4 weight percent dimethylsiloxane units; and 0 to 80 weight percent of a block polyestercarbonate comprising a polyester block comprising resorcinol ester units having the structure 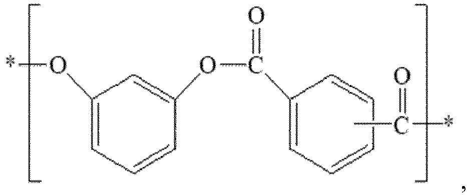 and a polycarbonate block comprising carbonate units having the structure 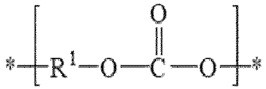 wherein at least 60 percent of the total number of R¹ groups are aromatic divalent groups; wherein the block polyestercarbonate-polysiloxane and the block polyestercarbonate are present in a total amount of greater than 60 weight percent to 100 weight percent, based on the total weight of the build composition; and wherein the block polyestercarbonate-polysiloxane contributes 0.3 to 1.5 weight percent of dimethylsiloxane units to the build composition, based on the total weight of the build composition; and wherein the support structure comprises a support composition comprising a copolycarbonate comprising bisphenol isophorone carbonate units and bisphenol A carbonate units, wherein the bisphenol isophorone carbonate units have the structure 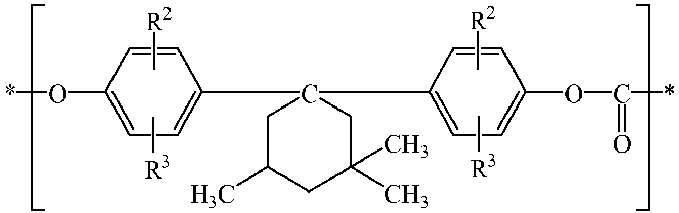 wherein R² and R³ are independently at each occurrence hydrogen or (C₁-C₁₀)-alkyl.

The additively manufactured article comprises a build structure and a support structure contacting the build structure. As described above, the purpose of the support structure is to temporarily support the build structure until it cools sufficiently to maintain its structure without support.

The build structure comprises a build composition comprising a block polyestercarbonate-polysiloxane. The block polyestercarbonate-polysiloxane block comprises at least one polyester block, at least one polycarbonate block, and at least one polysiloxane block. The at least one polyester block comprises resorcinol ester units, each resorcinol ester unit having the structure 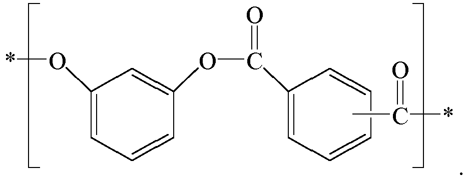 The at least one polycarbonate block comprises carbonate units, each carbonate unit having the structure 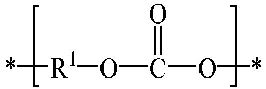 wherein at least 60 percent of the total number of R¹ groups are aromatic divalent groups. The at least one polysiloxane block comprises dimethylsiloxane units.

In some embodiments, the aromatic divalent groups are C₆-C₂₄ aromatic divalent groups. When not all R¹ groups are aromatic, the remainder are C₂-C₂₄ aliphatic divalent groups. In some embodiments, each R¹ is a radical of the formula 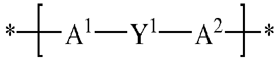 wherein each of A¹ and A² is independently a monocyclic divalent aryl radical, and Y¹ is a bridging radical having one or two atoms that separate A¹ from A². Examples of A¹ and A² include 1,3-phenylene and 1,4-phenylene, each optionally substituted with one, two, or three C₁-C₆ alkyl groups. The bridging radical Y¹ can be a C₁-C₁₂ (divalent) hydrocarbylene group. As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, branched, saturated, or unsaturated. It can also contain combinations of aliphatic, aromatic, straight chain, cyclic, bicyclic, branched, saturated, and unsaturated hydrocarbon moieties. When the hydrocarbyl residue is described as substituted, it can contain heteroatoms in addition to carbon and hydrogen. In some embodiments, one atom separates A¹ from A². Illustrative examples of Y¹ radicals are -O-, -S-, -S(O)-, -S(O)₂-, -C(O)-, methylene (-CH₂-; also known as methylidene), ethylidene (-CH(CH₃)-), isopropylidene (-C(CH₃)₂-), neopentylidene, cyclohexylidene, cyclopentadecylidene, cyclododecylidene, adamantylidene, cyclohexylidene methylene, cyclohexylmethylene, and 2-[2.2.1]-bicycloheptylidene.

In some embodiments, the resorcinol ester units comprise resorcinol isophthalate/terephthalate units, and the carbonate units comprise resorcinol carbonate units and bisphenol A carbonate units.

The block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene (i.e., the carbonate units are resorcinol carbonate units), and 5 to 35 mole percent of carbonate units wherein R¹ is 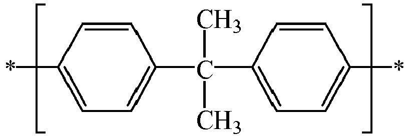 (i.e., the carbonate units are bisphenol A carbonate units). Within the range of 30 to 90 mole percent, the amount of resorcinol ester units can be 50 to 90 mole percent, or 70 to 90 mole percent. Within the range of 5 to 35 mole percent, the amount of resorcinol carbonate units can be 5 to 25 mole percent, or 5 to 15 mole percent. Within the range of 5 to 35 mole percent, the amount of bisphenol A carbonate units can be 5 to 25 mole percent, or 5 to 15 mole percent. The block polyestercarbonate-polysiloxane further comprises, based on the weight of the block polyestercarbonate-polysiloxane, 0.2 to 4 weight percent dimethylsiloxane units. Within this range, the amount of dimethylsiloxane units can be 0.4 to 2 weight percent.

In a very specific embodiment, the block polyestercarbonate-polysiloxane comprises, based on total moles of carbonate and ester units, 70 to 90 mole percent of resorcinol isophthalate/terephthalate units, 5 to 15 mole percent of resorcinol carbonate units, and 5 to 15 mole percent of bisphenol A carbonate units, and further comprises, based on the total weight of the block polyestercarbonate-polysiloxane, 0.2 to 4 weight percent, or 0.4 to 2 weight percent, polydimethylsiloxane.

There is no particular limit on the structure of end groups on the block polyestercarbonate-polysiloxane. An end-capping agent (also referred to as a chain stopping agent or chain terminating agent) can be included during polymerization to provide end groups. Examples of end-capping agents include monocyclic phenols such as phenol, p-cyanophenol, and C₁-C₂₂ alkyl-substituted phenols such as p-cumylphenol, resorcinol monobenzoate, and p- tertiarybutyl phenol; monoethers of diphenols, such as p-methoxyphenol; monoesters of diphenols such as resorcinol monobenzoate; functionalized chlorides of aliphatic monocarboxylic acids such as acryloyl chloride and methacryoyl chloride; and mono-chloroformates such as phenyl chloroformate, alkyl-substituted phenyl chloroformates, p-cumyl phenyl chloroformate, and toluene chloroformate. Combinations of different end groups can be used. In some embodiments, the block polyestercarbonate-polysiloxane has a weight average molecular weight of 15,000 to 55,000 grams/mole, as determined by gel permeation chromatography using bisphenol A polycarbonate standards. Within this range, the weight average molecular weight can be 18,000 to 50,000 grams/mole.

Methods for the preparation of block polyestercarbonate-polysiloxanes are known and described, for example, in U.S. Patent No. 7,790,292 B2 to Colborn et al., issued 7 September 2010.

The build composition comprises the block polyestercarbonate-polysiloxane in an amount of 20 to 100 weight percent, based on the total weight of the build composition. In some embodiments, the amount of block polyestercarbonate-polysiloxane is 30 to 80 weight percent, or 40 to 60 weight percent. In other embodiments, the amount of block polyestercarbonate-polysiloxane is 50 to 100 weight percent, or 75 to 100 weight percent, or 85 to 100 weight percent.

The block polyestercarbonate-polysiloxane contributes 0.3 to 1.5 weight percent of dimethylsiloxane units to the build composition, based on the total weight of the build composition. In some embodiments, the amount of dimethylsiloxane units is 0.3 to 0.7 weight percent, or 0.4 to 0.6 weight percent, based on the total weight of the build composition. In other embodiments, the amount of dimethylsiloxane units is 0.7 to 1.3 weight percent, or 0.7 to 1.1 weight percent, based on the total weight of the build composition.

In addition to the block polyestercarbonate-polysiloxane, the build composition can, optionally, further comprise a block polyestercarbonate. It will be understood that the block polyestercarbonate is chemically distinct from the block polyestercarbonate-polysiloxane. Specifically, the block polyestercarbonate-polysiloxane comprises at least one polysiloxane block, while the block polyestercarbonate does not comprise a polysiloxane block. The block polyestercarbonate comprises a polyester block comprising resorcinol ester units having the structure 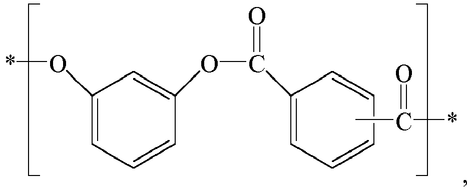 and a polycarbonate block comprising carbonate units having the structure 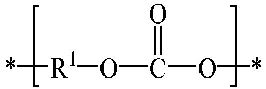 wherein at least 60 mole percent of the total number of R¹ groups are aromatic divalent groups. In some embodiments, the aromatic divalent groups are C₆-C₂₄ aromatic divalent groups. When not all R¹ groups are aromatic, the remainder are C₂-C₂₄ aliphatic divalent groups. In some embodiments, each R¹ is a radical of the formula 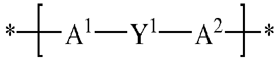 wherein each of A¹ and A² is independently a monocyclic divalent aryl radical and Y¹ is a bridging radical having one or two atoms that separate A¹ from A². In some embodiments, one atom separates A¹ from A². Illustrative non-limiting examples of radicals of this type are -O-, -S-, -S(O)-, -S(O)₂-, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ can be a C₁-C₁₂ (divalent) hydrocarbylene group. As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, branched, saturated, or unsaturated. It can also contain combinations of aliphatic, aromatic, straight chain, cyclic, bicyclic, branched, saturated, and unsaturated hydrocarbon moieties. When the hydrocarbyl residue is described as substituted, it can contain heteroatoms in addition to carbon and hydrogen. Examples of Y¹ include methylene (-CH₂-; also known as methylidene), ethylidene (-CH(CH₃)-), isopropylidene (-C(CH₃)₂-), and cyclohexylidene.

In some embodiments, the polyester block comprises resorcinol ester units having the structures 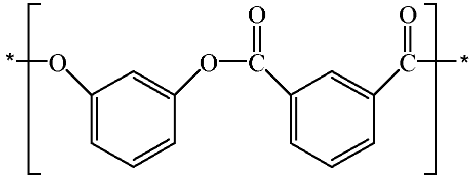 and 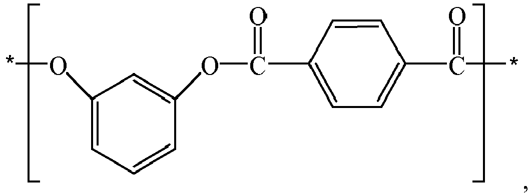 and the polycarbonate block comprises bisphenol A carbonate units having the structure

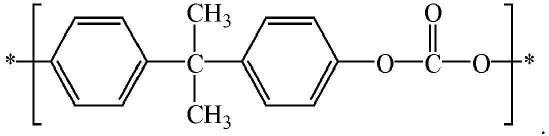

In some embodiments, the block polyestercarbonate comprises, based on total moles of carbonate and ester units, 30 to 90 mole percent of the resorcinol isophthalate/terephthalate units, 5 to 35 mole percent of resorcinol carbonate units, and 5 to 35 mole percent of bisphenol A carbonate units. Within these ranges, the mole percent of resorcinol isophthalate/terephthalate units can be 50 to 90, the mole percent of resorcinol carbonate units can be 5 to 25, and the mole percent of bisphenol A carbonate units can be 5 to 25. In a very specific embodiment, the block polyestercarbonate comprises 70 to 90 mole percent of resorcinol isophthalate/terephthalate units, 5 to 15 mole percent of resorcinol carbonate units, and 5 to 15 mole percent of bisphenol A carbonate units.

In some embodiments, the block polyestercarbonate has a weight average molecular weight of 5,000 to 100,000 grams/mole, as determined by gel permeation chromatography (GPC), using bisphenol A polycarbonate standards. Within this range, the weight average molecular weight can be 10,000 to 50,000 grams/mole, or 10,000 to 40,000 grams/mole.

Methods for the preparation of block polyestercarbonates are known and described, for example, in U.S. Patent No. 7,790,292 B2 to Colborn et al., issued 7 September 2010.

When present in the build composition, the block polyestercarbonate can be used in an amount of 1 to 80 weight percent, based on the total weight of the build composition. In some embodiments, the block polyestercarbonate amount is 1 to 79 weight percent, or 10 to 60 weight percent, or 20 to 55 weight percent, or 25 to 50 weight percent.

The block polyestercarbonate-polysiloxane and the optional block polyestercarbonate are present in a total amount of greater than 60 weight percent to 100 weight percent, based on the total weight of the build composition. Within this range, the total amount of block polyestercarbonate-polysiloxane and optional block polyestercarbonate can be 70 to 100 weight percent, or 80 to 100 weight percent, or 85 to 100 weight percent.

The build composition can, optionally, further comprise a core-shell impact modifier. The core-shell impact modifier comprises a shell comprising poly(methyl methacrylate), and a core comprising polydimethylsiloxane, poly(butyl acrylate), or a combination thereof. In some embodiments, the core-shell impact modifier comprises, based on the weight of the core-shell impact modifier, 5 to 40 weight percent of the shell, and 60 to 95 weight percent of the core. Within the range of 5 to 40 weight percent, the amount of shell can be 7 to 35 weight percent, or 8 to 30 weight percent. Within the range of 60 to 95 weight percent, the amount of core can be 65 to 93 weight percent, or 70 to 92 weight percent.

In some embodiments, the core of the core-shell impact modifier comprises polydimethylsiloxane. In some embodiments, the core of the core-shell impact modifier comprises poly(butyl acrylate). In some embodiments, the core of the core-shell impact modifier comprises a combination of polydimethylsiloxane and poly(butyl acrylate).

In some embodiments, the core of the core-shell impact modifier comprises polydimethylsiloxane. The polydimethylsiloxane can be produced by emulsion copolymerization of monomers comprising a source of dimethylsiloxane units. The source of dimethylsiloxane units can comprise, for example, a cyclic dimethylsiloxane such as 1,3,5,7-octamethylcyclotetrasiloxane (D4), a silicon-containing monomer comprising two hydrolyzable groups, such as dimethyldimethoxysilane, or a combination thereof. The monomers used to form the polydimethylsiloxane can, optionally, include a crosslinking agent, a graftlinking agent, or a combination thereof. The crosslinking agent can comprise a silicon-containing monomer comprising three or more hydrolyzable groups, such as methyltriethoxysilane, tetrapropyloxysilane, or a combination thereof. The graftlinking agent can comprise a silicon-containing monomer comprising at least one hydrolyzable group and a polymerizable carbon-carbon double bond. Examples of graftlinking agents include methacryloyloxypropylmethoxydimethylsilane, methacryloyloxypropyldimethoxymethylsilane, vinyldimethoxymethylsilane, vinylphenylmethoxymethylsilane, vinylphenyldimethoxysilane, and combinations thereof.

In some embodiments, the core of the core-shell impact modifier comprises poly(butyl acrylate). In some embodiments, the core comprises crosslinked poly(butyl acrylate). Crosslinked poly(butyl acrylate) can be prepared by polymerization of butyl acrylate, optionally in the presence of a monomer comprising at least two polymerizable carbon-carbon double bonds. Examples of such monomers include allyl acrylate, allyl methacrylate, ethyleneglycol dimethacrylate, 1,3-butyleneglycol dimethacrylate, divinylbenzene, and combinations thereof.

In some embodiments, the core of the core-shell impact modifier comprises a combination of polydimethylsiloxane and poly(butyl acrylate). In these embodiments, the core can be described as a polydimethylsiloxane-poly(butyl acrylate) composite rubber. The polydimethylsiloxane component of the composite rubber can be formed by reacting a source of dimethylsiloxane units, such as a cyclic dimethylsiloxane such as 1,3,5,7-octamethylcyclotetrasiloxane (D4), a silicon-containing monomer comprising two hydrolyzable groups such as dimethyldimethoxysilane, or a combination thereof. The monomers used to form the polydimethylsiloxane component of the composite rubber can, optionally, further include a crosslinking agent, a graftlinking agent, or a combination thereof. The crosslinking agent can comprise a silicon-containing monomer comprising three or more hydrolyzable groups, such as methyltriethoxysilane, tetrapropyloxysilane, or a combination thereof. The graftlinking agent can comprise a silicon-containing monomer comprising at least one hydrolyzable group and a polymerizable carbon-carbon double bond. Examples of graftlinking agents include methacryloyloxypropylmethoxydimethylsilane, methacryloyloxypropyldimethoxymethylsilane, vinyldimethoxymethylsilane, vinylphenylmethoxymethylsilane, vinylphenyldimethoxysilane, and combinations thereof. The poly(butyl acrylate) component of the composite rubber can be formed by polymerizing butyl acrylate, optionally in the presence of a monomer comprising at least two polymerizable carbon-carbon double bonds, a silicon-containing monomer comprising at least one hydrolyzable group and a polymerizable carbon-carbon double bond, or a combination thereof. Examples of monomers comprising at least two polymerizable carbon-carbon double bonds include allyl acrylate, allyl methacrylate, ethyleneglycol dimethacrylate, 1,3-butyleneglycol dimethacrylate, divinylbenzene, and combinations thereof. Examples of silicon-containing monomers comprising at least one hydrolyzable group and a polymerizable carbon-carbon double bond include methacryloyloxypropylmethoxydimethylsilane, methacryloyloxypropyldimethoxymethylsilane, vinyldimethoxymethylsilane, vinylphenylmethoxymethylsilane, vinylphenyldimethoxysilane, and combinations thereof. In some embodiments, the composite rubber comprises 70 to 95 weight percent polydimethylsiloxane and 5 to 30 weight percent poly(butyl acrylate), based on the weight of the composite rubber.

The shell of the core-shell impact modifier comprises poly(methyl methacrylate). The shell, which is formed in the presence of the core, can be produced by polymerization of methyl methacrylate. The monomers used to form the shell can, optionally, further comprise a monomer comprising at least two polymerizable carbon-carbon double bonds. Examples of such monomers include allyl acrylate, allyl methacrylate, ethyleneglycol dimethacrylate, 1,3-butyleneglycol dimethacrylate, divinylbenzene, and combinations thereof.

Core-shell impact modifiers and methods for their preparation are known and described, for example, in U.S. Patent Nos. 6,153,694 to Miyatake et al. and 9,127,154 B2 to Li et al., and U.S. Patent Application Publication No. US 2008/0242797 A1 of Saegusa et al. Core-shell impact modifiers are also commercially available as, for example, PARALOID™ EXL 2335 impact modifier from The Dow Chemical Company, KANE ACE™ MR-01 impact modifier from Kaneka, and METABLEN™ SX-005 impact modifier from Mitsubishi Chemical.

When present in the build composition, the core-shell impact modifier can be used in an amount of 1 to 8 weight percent, based on the total weight of the build composition. Within this range, the amount of core-shell impact modifier can be 2 to 7 weight percent, or 2 to 6 weight percent, or 1 to 5 weight percent, or 2 to 5 weight percent.

The build composition can, optionally, further comprise a flame retardant. A flame retardant is a chemical compound or mixture of chemical compounds capable of improving the flame retardancy of the build composition. Suitable flame retardants include, for example, aromatic phosphate esters (including triphenyl phosphate, resorcinol bis(diphenyl phosphate), bisphenol A bis(diphenyl phosphate), and oligomeric aromatic phosphate esters), metal dialkylphosphinates (including aluminum tris(diethylphosphinate), phosphazenes (including hexaphenoxycyclotriphosphazene), melamine-containing flame retardants (including melamine phosphate, melamine pyrophosphate, melamine polyphosphate, and melamine cyanurate), metal hydroxides (including magnesium hydroxide, aluminum hydroxide, and cobalt hydroxide), halogenated polymers (including brominated polycarbonate), and combinations thereof. In this application, block polyestercarbonate-polysiloxane is not considered a flame retardant. When present, the flame retardant can be used in an amount of 0.5 to 20 weight percent, based on the total weight of the build composition. Within this range, the flame retardant amount can be 1 to 15 weight percent, or 2 to 12 weight percent. In some embodiments, the build composition comprises 2 to 15 weight percent of an aromatic phosphate ester, based on the total weight of the build composition. Within this range the aromatic phosphate ester amount can be 3 to 13 weight percent. In some embodiments, the build composition comprises 1 to 10 weight percent of a brominated polycarbonate, based on the total weight of the build composition. Within this range, the brominated polycarbonate amount can be 1 to 9 weight percent, or 2 to 8 weight percent, or 3 to 8 weight percent. In some embodiments, the build composition excludes flame retardants.

The support structure comprises a support composition comprising a copolycarbonate. The copolycarbonate comprises bisphenol isophorone carbonate units and bisphenol A carbonate units. The bisphenol isophorone carbonate units have the structure 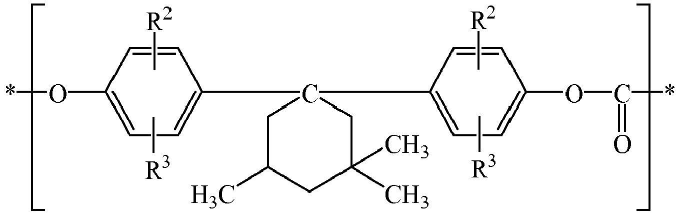 wherein R² and R³ are independently at each occurrence hydrogen or (C₁-C₁₀)-alkyl. In some embodiments, R² and R³ are hydrogen. Bisphenol A carbonate units have the structure

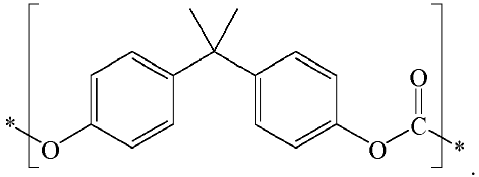

In some embodiments, the copolycarbonate comprises 40 to 80 mole percent of bisphenol isophorone carbonate units and 20 to 60 mole percent of bisphenol A carbonate units, based on 100 mole percent total of bisphenol isophorone carbonate units and bisphenol A carbonate units. Within the range of 40 to 80 mole percent, the content of bisphenol isophorone carbonate units can be 50 to 70 mole percent. Within the range of 20 to 60 mole percent, the content of bisphenol A carbonate units can be 30 to 50 mole percent. In some embodiments, the copolycarbonate comprises 50 to 65 mole percent bisphenol isophorone carbonate units, and 35 to 50 mole percent bisphenol A carbonate units.

The copolycarbonate can, optionally, incorporate a branching agent to increase its viscosity. Branching agents include, for example, trimellitic acid, trimellitic anhydride, trimellitic trichloride, 1,1,1-tris(p-hydroxyphenyl)ethane (THPE), 1,3,5-tris(2-(p-hydroxyphenyl)-prop-2-yl)benzene, 4-[2-[4-[1,1-bis(4-hydroxyphenyl)ethyl]phenyl]propan-2-yl]phenol, 4-chloroformyl phthalic anhydride, trimesic acid, benzophenone tetracarboxylic acid, and combinations thereof. The copolycarbonate can, optionally, incorporate the residue of an endcapping agent, which is used to control the molecular weight of the copolycarbonate. Endcapping agents include, for example, phenol, *para*-cumylphenol, *para-tert*-butylphenol, and *para*-octylphenol. Monofunctional acids and acid chlorides can also be used as endcapping agents.

Copolycarbonates are known, and methods for their synthesis are described, for example in International Patent Application Publication No. WO 2017/191050 A1 of Hungerland et al., published 9 November 2017. Copolycarbonates are also commercially available as, for example, APEC™ high-heat polycarbonate resins from Covestro.

The support composition comprises the copolycarbonate in an amount of 30 to 100 weight percent, based on the total weight of the support composition. Within this range, the copolycarbonate amount can be 40 to 100 weight percent, or 45 to 95 weight percent.

In addition to the copolycarbonate, the support composition can, optionally, further comprise a bisphenol A polycarbonate. A bisphenol A polycarbonate is a polymer comprising bisphenol A carbonate units having the structure 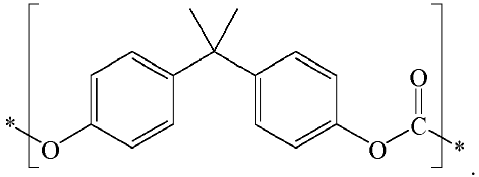 The bisphenol A polycarbonate can be linear or branched, or a combination of linear and branched bisphenol A polycarbonates can be used. When the bisphenol A polycarbonate is branched, it can incorporate one or more of the branching agents described above in the context of the copolycarbonate. In some embodiments, the support composition comprises 55 to 80 weight percent of the copolycarbonate and 20 to 45 weight percent of the bisphenol A polycarbonate, based on the total weight of the support composition.

The support composition can, optionally, further comprise a silicone having a kinematic viscosity of 300,000 to 100,000,000 centistokes at 25° C. Within this range, the kinematic viscosity can be 600,000 to 20,000,000 centistokes, or 600,000 to 12,000,000 centistokes. Silicones, also known as polydiorganosiloxanes or polysiloxanes, are polymers having alternating silicon and oxygen atoms in the skeletal structure, and containing silicon-bonded hydrocarbon radicals, the hydrocarbon radicals being attached to the silicon atoms through carbon-silicon bonds. The silicones comprise units of the general formula RᵣSiO_{(4-r/2)}, wherein r is 0, 1, 2 or 3, provided that the average numerical value of r is from 1.9 to 2.1, and wherein each R is independently hydrogen, hydroxyl, or a substituted or unsubstituted hydrocarbon radical such as, for example, a (C₁-C₁₂)-alkyl radical (e.g., methyl, ethyl, propyl, cyclohexyl); an aryl radical (e.g., phenyl, naphthyl); an alkaryl radical (e.g., tolyl, xylyl); an aralkyl radicals (e.g., benzyl, phenylethyl); a (C₁-C₁₂)-alkoxylradical; or a heterocyclic radical. The hydrocarbon radical can, optionally, be substituted with one or more halogen atoms. Methods of preparing high-viscosity silicones are described, for example, in U.S. Patent Nos. 7,250,127 to Geck et al., issued 31 July 2007; and 7,897,666 to Berg, issued 1 March 2011. Suitable silicones are also commercially available as, for example, GENIOPLAST™ Gum, GENIOPLAST™ Pellet S, and GENIOPLAST™ Pellet P, all from Wacker Chemie AG. When present, the silicone can be used in an amount of 0.5 to 4.5 weight percent, based on the total weight of the support composition. Within this range, the silicone amount can be 1 to 3 weight percent. Note that these silicone amounts do account for any inorganic filler, such as fused, fumed, or precipitated silica, that may be present in commercially available high-viscosity silicones.

In a specific embodiment, the support composition comprises, based on the total weight of the support composition, 55 to 85 weight percent of the copolycarbonate, and 15 to 45 weight percent of a bisphenol A polycarbonate; the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units. In this embodiment, the support composition can, optionally, further comprise, based on the total weight of the support composition, 0.5 to 4.5 weight percent of a silicone having a kinematic viscosity of 300,000 to 100,000,000 centistokes at 25° C. Also in this embodiment, the bisphenol A polycarbonate can, optionally, comprise a linear bisphenol A polycarbonate and a branched bisphenol A polycarbonate.

In a very specific embodiment of the additively manufactured article, the build composition comprises 87 to 97 weight percent of the block polyestercarbonate-polysiloxane, and the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 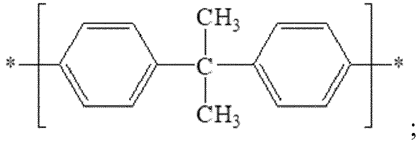 the build composition further comprises 3 to 13 weight percent of an aromatic phosphate ester; the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and the support composition further comprises 15 to 45 weight percent of a bisphenol A polycarbonate, based on the total weight of the support composition. Within this embodiment, the support composition can, optionally, further comprise 0.5 to 4.5 weight percent of a silicone having a kinematic viscosity of 300,000 to 100,000,000 centistokes at 25 °C, based on the total weight of the support composition.

In another very specific embodiment of the additively manufactured article, the build composition comprises 35 to 65 weight percent of the block polyestercarbonate-polysiloxane, and the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 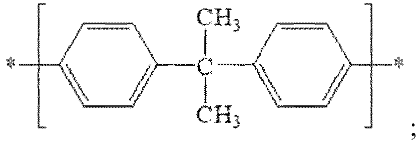 the build composition further comprises 25 to 55 weight percent of the block polyestercarbonate, and the block polyestercarbonate comprises 70 to 90 mole percent of the resorcinol ester units, 5 to 15 mole percent of carbonate units wherein R¹ is 1,3-phenylene, and 5 to 15 mole percent of carbonate units wherein R¹ is 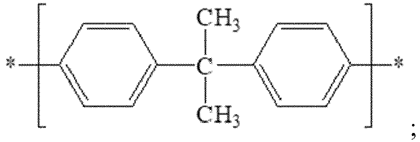 the build composition further comprises 1 to 8 weight percent of a core-shell impact modifier comprising a shell comprising poly(methyl methacrylate), and a core comprising polydimethylsiloxane, poly(butyl acrylate), or a combination thereof; the build composition further comprises 1 to 10 weight percent of a brominated polycarbonate; the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and the support composition further comprises 15 to 45 weight percent of a bisphenol A polycarbonate, based on the total weight of the support composition. Within this embodiment, the support composition can, optionally, further comprise 0.5 to 4.5 weight percent of a silicone having a kinematic viscosity of 300,000 to 100,000,000 centistokes at 25 °C, based on the total weight of the support composition.

Another embodiment is a method of fused filament fabrication. The method comprises: melting a portion of a first filament to form a first thermally-solidifiable material in molten form, and dispensing the first thermally-solidifiable material in molten form in a predetermined pattern so as to define a build structure; and melting a portion of a second filament to form a second thermally-solidifiable material in molten form, and, in coordination with the dispensing the first thermally solidifiable material, dispensing the second thermally-solidifiable material in molten form so as to define a support structure for (in contact with) the build structure; wherein the first thermally-solidifiable material comprises a build composition comprising 20 to 100 weight percent of a block polyestercarbonate-polysiloxane comprising a polyester block comprising resorcinol ester units having the structure 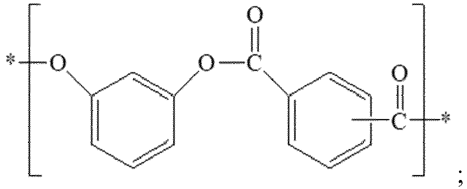 a polycarbonate block comprising carbonate units having the structure 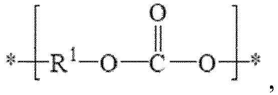 wherein at least 60 percent of the total number of R¹ groups are aromatic divalent groups; and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene, and 5 to 35 mole percent of carbonate units wherein R¹ is 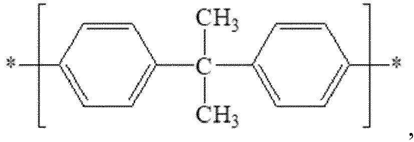 and further comprises, based on the weight of the block polyestercarbonate-polysiloxane, 0.2 to 4 weight percent dimethylsiloxane units; and 0 to 80 weight percent of a block polyestercarbonate comprising a polyester block comprising resorcinol ester units having the structure 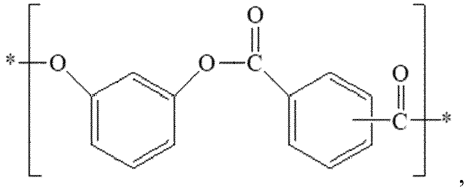 and a polycarbonate block comprising carbonate units having the structure 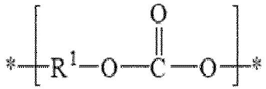 wherein at least 60 percent of the total number of R¹ groups are aromatic divalent groups; wherein the block polyestercarbonate-polysiloxane and the block polyestercarbonate are present in a total amount of greater than 60 weight percent to 100 weight percent, based on the total weight of the build composition; and wherein the block polyestercarbonate-polysiloxane contributes 0.3 to 0.7 weight percent of dimethylsiloxane units to the build composition, based on the total weight of the build composition; and wherein the support structure comprises a support composition comprising a copolycarbonate comprising bisphenol isophorone carbonate units and bisphenol A carbonate units, wherein the bisphenol isophorone carbonate units have the structure 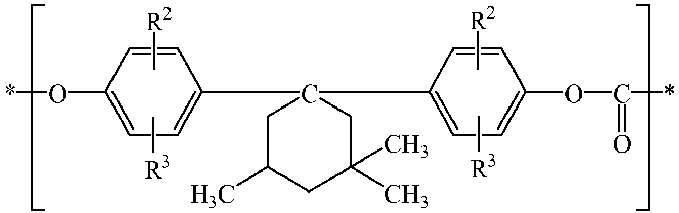 wherein R² and R³ are independently at each occurrence hydrogen or (C₁-C₁₀)-alkyl.

In some embodiment of the method, the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is

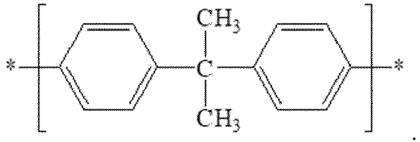

In some embodiments of the method, the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and the support composition further comprises 15 to 45 weight percent of a bisphenol A polycarbonate, based on the total weight of the support composition. In these embodiments, the support composition can, optionally, further comprise 0.5 to 4.5 weight percent of a silicone having a kinematic viscosity of 300,000 to 100,000,000 centistokes at 25 °C, based on the total weight of the support composition.

In a very specific embodiment of the method, the build composition comprises 87 to 97 weight percent of the block polyestercarbonate-polysiloxane, and the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 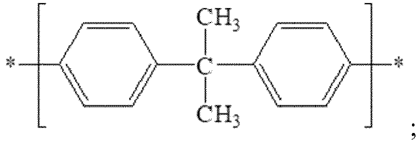 the build composition further comprises 3 to 13 weight percent of an aromatic phosphate ester; the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and the support composition further comprises 15 to 45 weight percent of a bisphenol A polycarbonate, based on the total weight of the support composition. The support composition can, optionally, further comprise 0.5 to 4.5 weight percent of a silicone having a kinematic viscosity of 300,000 to 100,000,000 centistokes at 25 °C, based on the total weight of the support composition.

In another very specific embodiment of the method, the build composition comprises 35 to 65 weight percent of the block polyestercarbonate-polysiloxane, and the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 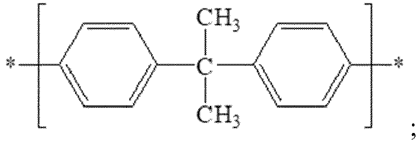 the build composition further comprises 25 to 55 weight percent of the block polyestercarbonate, and the block polyestercarbonate comprises 70 to 90 mole percent of the resorcinol ester units, 5 to 15 mole percent of carbonate units wherein R¹ is 1,3-phenylene, and 5 to 15 mole percent of carbonate units wherein R¹ is 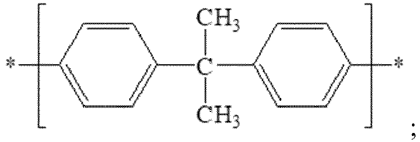 the build composition further comprises 1 to 8 weight percent of a core-shell impact modifier comprising a shell comprising poly(methyl methacrylate), and a core comprising polydimethylsiloxane, poly(butyl acrylate), or a combination thereof; the build composition further comprises 1 to 10 weight percent of a brominated polycarbonate; the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and the support composition further comprises 15 to 45 weight percent of a bisphenol A polycarbonate, based on the total weight of the support composition. The support composition can, optionally, further comprise 0.5 to 4.5 weight percent of a silicone having a kinematic viscosity of 300,000 to 100,000,000 centistokes at 25° C, based on the total weight of the support composition.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

### EXAMPLES

Components used to prepare compositions are summarized in Table 1.

**Table 1**

| Component | Description |
|---|---|
| PEC-Si | para-Cumylphenol endcapped block polyestercarbonate-polysiloxane with about 99 weight percent total of polyester blocks and polycarbonate blocks, and about 1 weight percent polysiloxane blocks; the polyestercarbonate portion contains about 82 mole percent 1,3-phenylene isophthalate-co-terephthalate units, about 9 mole percent resorcinol carbonate units, and about 9 mole percent bisphenol A carbonate units; the polysiloxane blocks have, on average, about 10 dimethylsiloxane units per block; the polyestercarbonate-polysiloxane has a weight average molecular weight of about 24,500 grams/mole and is preparable by the procedure of Example 2-14 of Method 2 as described in US Patent No. 7,790,292 B2 to Colburn et al., except that the p-cumylphenol level was adjusted to achieve a weight average molecular weight of about 24,500 grams/mole. |
| PEC | para-Cumylphenol endcapped block polyestercarbonate with polyester blocks containing 1,3-phenylene isophthalate-*co*-terephthalate units, and carbonate blocks containing bisphenol A carbonate and resorcinol carbonate units; the copolymer has about 82 mole percent resorcinol ester (50:50 isophthalate/terephthalate) units, about 9 mole percent resorcinol carbonate units, and about 9 mole percent bisphenol A carbonate units; it has a weight average molecular weight of about 20,000 grams/mole, and is preparable by the procedure of Comparative Example 2-4 of U.S. Patent No. 7,790,292 B2 to Colborn. |
| BPI/BPA PC | Copolycarbonate containing 55-60 mole percent bisphenol isophorone carbonate units and 40-45 mole percent bisphenol A carbonate units, having a glass transition temperature of about 205 °C, a melt volume flow rate of 8 cm³/10 minutes determined at 330 °C and 2.16 kilogram load, and a Vicat B softening temperature of 202 °C determined at 50 Newtons load and a heating rate of 120 °C/hour; obtained in UV stabilized form as APEC™ 2097 resin from Covestro. |
| BPA PC 1 | *para*-Cumylphenol end-capped linear bisphenol A polycarbonate, having a weight average molecular weight of about 36,500 grams/mole and a dispersity of about 2.5 as determined by gel permeation chromatography using bisphenol A polycarbonate standards. |
| BPA PC 2 | *para*-Cumylphenol endcapped bisphenol A polycarbonate incorporating the branching agent 1,1,1-tris(4-hydroxyphenyl)ethane (THPE), and having 0.4 mole percent branching and a weight average molecular weight of about 37,000 grams/mole determined by gel permeation chromatography using bisphenol A polycarbonate standards. |
| CSIM | Core-shell impact modifier having a core comprising crosslinked poly(butyl acrylate) and a shell comprising grafted poly(methyl methacrylate); obtained from The Dow Chemical Company as PARALOID™ EXL 2335 impact modifier. |
| BrPC | Brominated polycarbonate, prepared by copolymerization of phosgene and a 50:50 weight/weight mixture of 2,2',6,6'-tetrabromo-4,4'-isopropylidenediphenol and bisphenol A, and having a weight average molecular weight of about 22,500 grams/mole; preparable according to the method for forming "TBBPA-BPA Copolymer" in columns 26-27 of U.S. Patent No. 9,006,324 to Sybert et al. |
| OPE | Oligomeric phosphate ester flame retardant; obtained in powder form as FYROLFLEX™ SOL-DP flame retardant from ICL Industrial Products. |
| TBPDP | Tetrakis(2,4-di-tert-butylphenyl)4,4'-biphenyldiphosphonite, CAS Reg. No. 119345-01-6; obtained as IRGAFOS™ P-EPQ from BASF. |
| TiO₂ | Titanium dioxide, CAS Reg. No. 13463-67-7, polysiloxane coated; obtained as KRONOS™ 2233 titanium dioxide from Kronos, Inc. |
| SBl 104 | Solvent Blue 104, CAS Reg. No. 116-75-6; obtained as SANDOPLAST™ Blue 2B from Clariant. |
| SR 52 | Solvent Red 52, CAS Reg. No. 81-39-0; obtained as MACROLEX™ Red 5B from Lanxess. |
| Silicone/silica | Trimethylsiloxy-endcapped poly(dimethylsiloxane-co-vinylmethylsiloxane) (70 weight percent) on fumed silica (30 weight percent), obtained as GENIOPLAST™ Pellet S from Wacker Chemie AG. |
| Antioxidant | Pentaerythritol tetrakis(3-(3,5-di-tert-butyl-4-hydroxyphenyl)propionate), CAS Number 6683-19-8. |
| Stabilizer | Tris(2,4-di-tert-butylphenyl)phosphite, CAS Reg. No. 31570-04-4; obtained as IRGAFOS™ 168 from BASF. |

Build compositions B1 and B2 are summarized in Table 2, where component amounts are expressed in weight percent based on the total weight of the build composition.

Compositions were compounded on a 25 millimeter Werner-Pfleiderer ZAK twin-screw extruder having a length to diameter ratio of 33:1 and a vacuum port located upstream of the die face. For the B1 composition, the extruder was operated at barrel temperatures of about 288 °C / 288 °C / 293 °C / 298 °C / 303 °C / 308 °C / 313 °C from feed throat to die, a die temperature of about 313 °C, and a throughput of 15-25 kilograms/hour. Compounding conditions were similar for the B2 composition, except that the extruder was operated at barrel temperatures of about 193 °C / 249 °C / 260 °C / 271 °C / 282 °C / 288 °C from feed throat to die, and a die temperature of 288 °C. For both build compositions, all components were added at the feed throat and the extrudate was cooled in a water bath, then pelletized. Pellets were dried in a vacuum oven at 135 °C for at least 4 hours before use for filament extrusion. Glass transition temperature (T_{g}) values in Table 2 were determined by differential scanning calorimetry according to ASTM D3418-15 at a heating rate of 20 °C per minute.

**Table 2**

| | B1 | B2 |
|---|---|---|
| COMPOSITIONS | | |
| PEC-Si | 93.44 | 48.40 |
| PEC | 0.00 | 43.40 |
| CSIM | 0.00 | 3.00 |
| BrPC | 0.00 | 5.00 |
| OPE | 6.50 | 0.00 |
| TBPDP | 0.06 | 0.06 |
| TiO₂ | 0.00 | 0.139804 |
| SBl 104 | 0.00 | 0.000208 |
| SR 52 | 0.00 | 0.000076 |

| PROPERTY | | |
|---|---|---|
| T_{g} (°C) | 112 | 141 |

Support composition S1 is summarized in Table 3, where component amounts are expressed in weight percent based on the total weight of the support composition. To form the S1 composition, components were compounded on a twin-screw extruder operating at barrel temperatures of 177 °C / 238 °C / 279 °C / 293 °C / 293 °C / 293 °C / 299 °C / 299 °C / 309 °C from feed throat to die, and a die temperature of 309 °C. The extrudate was cooled and pelletized, and pellets were dried in a desiccant dryer (Dri-Air; East Windsor, Connecticut, USA) for one day prior to use to extrude filament. The S1 composition had a glass transition temperature (T_{g}) of 182 °C.

**Table 3**

| | S1 |
|---|---|
| BPI/BPA PC | 68.2 |
| BPA PC 1 | 24.3 |
| BPA PC 2 | 5.0 |
| Silicone/silica | 2.0 |
| Antioxidant | 0.2 |
| Stabilizer | 0.3 |

The S1 support filament was extruded by feeding pellets of the support composition through an extruder (FET, Leeds, UK) equipped with a precision melt pump. The screw for this extruder had a length to diameter ratio of 30:1, with lengths of 10D in the convey zone, 12D in the transition zone, and 8D in the metering section. The melt temperature was set at about 280 to 300 °C. The Bland B2 build filaments were similarly extruded, except that the melt temperature was set at about 300 to 330 °C. For all filaments, the extrudate exited vertically out of a die with a 4 millimeter orifice inner diameter and a 16 millimeter length. The extrudate was stretched to form monofilament while being air cooled. The puller line speed was adjusted to achieve a final filament diameter of 1.8 millimeters. On-line diameter measurements were acquired using a dual-axis high speed and high precision scanning micrometer (Keyence; Itasca, Illinois, USA).

Three-dimensional printing was performed using an AON-M2 open format industrial printer from AON3D with a polyetherimide build sheet. The printer was equipped with two extruders for build and support deposition and independently temperature-controlled build plate and chamber. Extrusion melt temperatures were 300 and 280 °C, respectively, for the B1 and B2 build materials, and 350 °C for the S1 support material. The build plate temperatures were 120 and 160 °C, respectively, for the B1 and B2 build materials. And the printing chamber temperature was 120 and 130 °C, respectively, for the B1 and B2 build materials. Tips with 0.4 millimeter diameter were used for both the build and support extruders. Print files were processed using Simplify3D slicer software.

The following factors were observed for the overall printing performance: tool path tracking, build sheet adhesion, self adhesion, cross adhesion, surface quality, and ability to support printing the design. The Bland B2 build materials both showed good printing performance when processed in combination with the S1 support material.

Ease of removal of the S1 support material as a breakaway support was assessed qualitatively by peeling apart printed build-support material laminate structures and observing the level of adhesion at the interface, pliability, and size of the support structures that were broken off. For both the B1-S1 and B2-S1 build-support combinations, the support-model material interface showed low level but sufficient adhesion, and the support structures were easily removed.

The invention includes at least the following aspects.
Aspect 1: An additively manufactured article comprising: a build structure; and a support structure contacting the build structure; wherein the build structure comprises a build composition comprising, based on the total weight of the build composition, 20 to 100 weight percent of a block polyestercarbonate-polysiloxane comprising a polyester block comprising resorcinol ester units having the structure 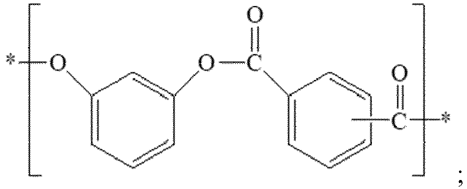 a polycarbonate block comprising carbonate units having the structure 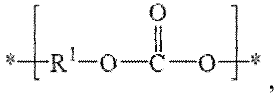 wherein at least 60 percent of the total number of R¹ groups are aromatic divalent groups; and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene, and 5 to 35 mole percent of carbonate units wherein R¹ is 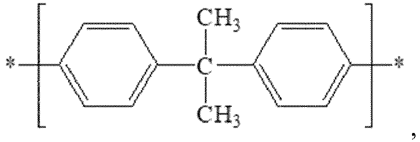 and further comprises, based on the weight of the block polyestercarbonate-polysiloxane, 0.2 to 4 weight percent dimethylsiloxane units; and 0 to 80 weight percent of a block polyestercarbonate comprising a polyester block comprising resorcinol ester units having the structure 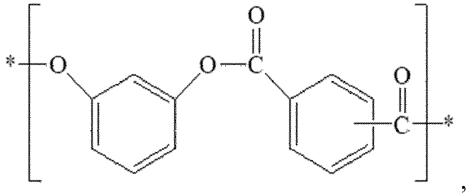 and a polycarbonate block comprising carbonate units having the structure 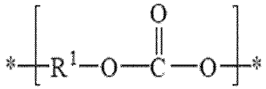 wherein at least 60 percent of the total number of R¹ groups are aromatic divalent groups; wherein the block polyestercarbonate-polysiloxane and the block polyestercarbonate are present in a total amount of greater than 60 weight percent to 100 weight percent, based on the total weight of the build composition; and wherein the block polyestercarbonate-polysiloxane contributes 0.3 to 1.5 weight percent of dimethylsiloxane units to the build composition, based on the total weight of the build composition; and wherein the support structure comprises a support composition comprising a copolycarbonate comprising bisphenol isophorone carbonate units and bisphenol A carbonate units, wherein the bisphenol isophorone carbonate units have the structure 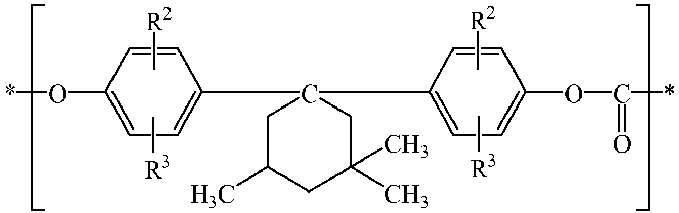 wherein R² and R³ are independently at each occurrence hydrogen or (C₁-C₁₀)-alkyl.
Aspect 2: The additively manufactured article of aspect 1, wherein the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 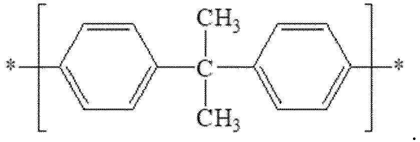
Aspect 3: The additively manufactured article of aspect 1 or 2, wherein the build composition comprises 1 to 80 weight percent of the block polyestercarbonate.
Aspect 4: The additively manufactured article of aspect 3, wherein the block polyestercarbonate comprises 70 to 90 mole percent of the resorcinol ester units, 5 to 15 mole percent of carbonate units wherein R¹ is 1,3-phenylene, and 5 to 15 mole percent of carbonate units wherein R¹ is 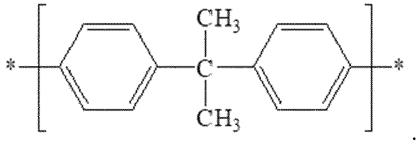
Aspect 5: The additively manufactured article of any one of aspects 1-4, wherein the build composition further comprises 1 to 8 weight percent of a core-shell impact modifier comprising a shell comprising poly(methyl methacrylate), and a core comprising polydimethylsiloxane, poly(butyl acrylate), or a combination thereof.
Aspect 6: The additively manufactured article of any one of aspects 1-5, wherein the build composition further comprises 1 to 10 weight percent of a brominated polycarbonate.
Aspect 7: The additively manufactured article of any one of aspects 1-6, wherein the build composition further comprises 3 to 13 weight percent of an aromatic phosphate ester.
Aspect 8: The additively manufactured article of any one of aspects 1-7, wherein the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and the support composition further comprises 15 to 45 weight percent of a bisphenol A polycarbonate, based on the total weight of the support composition.
Aspect 9: The additively manufactured article of aspect 1, wherein the build composition comprises 87 to 97 weight percent of the block polyestercarbonate-polysiloxane, and the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 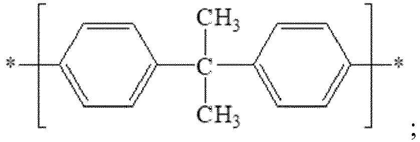 the build composition further comprises 3 to 13 weight percent of an aromatic phosphate ester; the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and the support composition further comprises 15 to 45 weight percent of a bisphenol A polycarbonate, based on the total weight of the support composition.
Aspect 10: The additively manufactured article of aspect 1, wherein the build composition comprises 35 to 65 weight percent of the block polyestercarbonate-polysiloxane, and the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 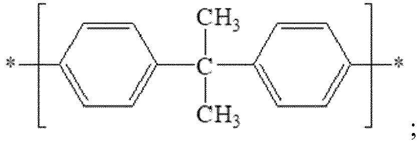 the build composition further comprises 25 to 55 weight percent of the block polyestercarbonate, and the block polyestercarbonate comprises 70 to 90 mole percent of the resorcinol ester units, 5 to 15 mole percent of carbonate units wherein R¹ is 1,3-phenylene, and 5 to 15 mole percent of carbonate units wherein R¹ is 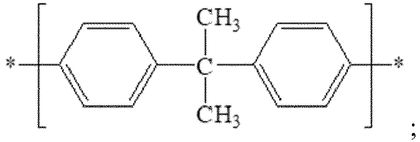 the build composition further comprises 1 to 8 weight percent of a core-shell impact modifier comprising a shell comprising poly(methyl methacrylate), and a core comprising polydimethylsiloxane, poly(butyl acrylate), or a combination thereof; the build composition further comprises 1 to 10 weight percent of a brominated polycarbonate; the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and the support composition further comprises 15 to 45 weight percent of a bisphenol A polycarbonate, based on the total weight of the support composition.
Aspect 11: A method of fused filament fabrication comprising: melting a portion of a first filament to form a first thermally-solidifiable material in molten form, and dispensing the first thermally-solidifiable material in molten form in a predetermined pattern so as to define a build structure; and melting a portion of a second filament to form a second thermally-solidifiable material in molten form, and, in coordination with the dispensing the first thermally solidifiable material, dispensing the second thermally-solidifiable material in molten form so as to define a support structure for the build structure; wherein the first thermally-solidifiable material comprises a build composition comprising 20 to 100 weight percent of a block polyestercarbonate-polysiloxane comprising a polyester block comprising resorcinol ester units having the structure 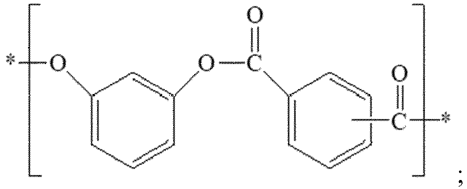 a polycarbonate block comprising carbonate units having the structure 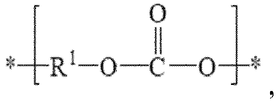 wherein at least 60 percent of the total number of R¹ groups are aromatic divalent groups; and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene, and 5 to 35 mole percent of carbonate units wherein R¹ is 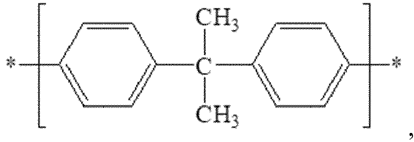 and further comprises, based on the weight of the block polyestercarbonate-polysiloxane, 0.2 to 4 weight percent dimethylsiloxane units; and 0 to 80 weight percent of a block polyestercarbonate comprising a polyester block comprising resorcinol ester units having the structure 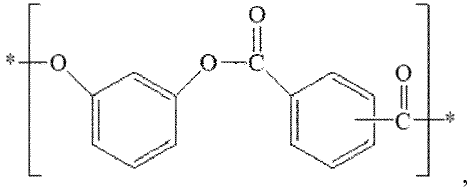 and a polycarbonate block comprising carbonate units having the structure 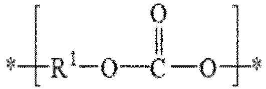 wherein at least 60 percent of the total number of R¹ groups are aromatic divalent groups; wherein the block polyestercarbonate-polysiloxane and the block polyestercarbonate are present in a total amount of greater than 60 weight percent to 100 weight percent, based on the total weight of the build composition; and wherein the block polyestercarbonate-polysiloxane contributes 0.3 to 0.7 weight percent of dimethylsiloxane units to the build composition, based on the total weight of the build composition; and wherein the support structure comprises a support composition comprising a copolycarbonate comprising bisphenol isophorone carbonate units and bisphenol A carbonate units, wherein the bisphenol isophorone carbonate units have the structure 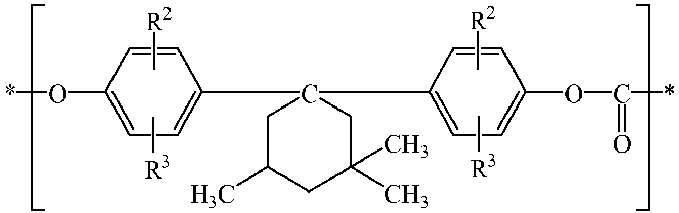 wherein R² and R³ are independently at each occurrence hydrogen or (C₁-C₁₀)-alkyl.
Aspect 12: The method of aspect 11, wherein the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 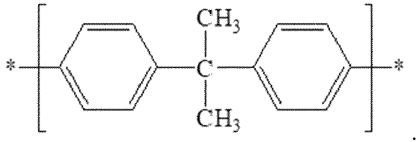
Aspect 13: The method of aspect 11 or 12, wherein the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and the support composition further comprises 15 to 45 weight percent of a bisphenol A polycarbonate, based on the total weight of the support composition.
Aspect 14: The method of aspect 11, wherein the build composition comprises 87 to 97 weight percent of the block polyestercarbonate-polysiloxane, and the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 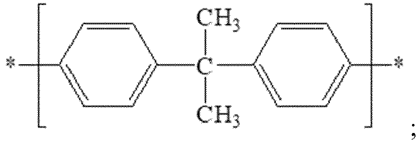 the build composition further comprises 3 to 13 weight percent of an aromatic phosphate ester; the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and the support composition further comprises 15 to 45 weight percent of a bisphenol A polycarbonate, based on the total weight of the support composition.
Aspect 15: The method of aspect 11, wherein the build composition comprises 35 to 65 weight percent of the block polyestercarbonate-polysiloxane, and the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 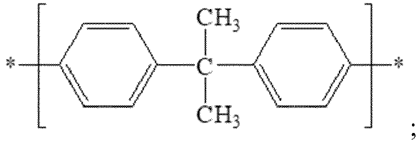 the build composition further comprises 25 to 55 weight percent of the block polyestercarbonate, and the block polyestercarbonate comprises 70 to 90 mole percent of the resorcinol ester units, 5 to 15 mole percent of carbonate units wherein R¹ is 1,3-phenylene, and 5 to 15 mole percent of carbonate units wherein R¹ is 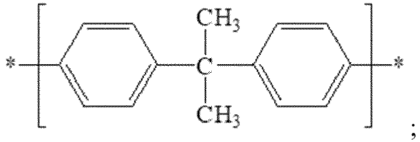 the build composition further comprises 1 to 8 weight percent of a core-shell impact modifier comprising a shell comprising poly(methyl methacrylate), and a core comprising polydimethylsiloxane, poly(butyl acrylate), or a combination thereof; the build composition further comprises 1 to 10 weight percent of a brominated polycarbonate; the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and the support composition further comprises 15 to 45 weight percent of a bisphenol A polycarbonate, based on the total weight of the support composition.

## Claims

1. An additively manufactured article comprising:
a build structure; and
a support structure contacting the build structure;
wherein the build structure comprises a build composition comprising, based on the total weight of the build composition,
20 to 100 weight percent of a block polyestercarbonate-polysiloxane comprising a polyester block comprising resorcinol ester units having the structure 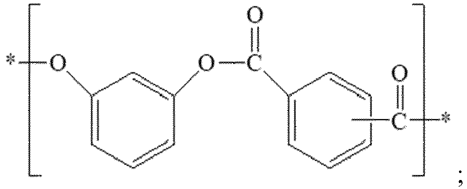
a polycarbonate block comprising carbonate units having the structure 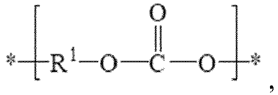
wherein at least 60 percent of the total number of R¹ groups are aromatic divalent groups; and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene, and 5 to 35 mole percent of carbonate units wherein R¹ is 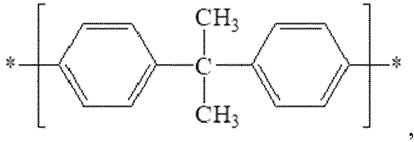 and further comprises, based on the weight of the block polyestercarbonate-polysiloxane, 0.2 to 4 weight percent dimethylsiloxane units; and
0 to 80 weight percent of a block polyestercarbonate comprising a polyester block comprising resorcinol ester units having the structure 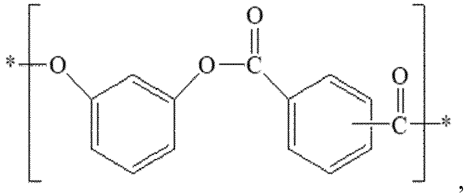 and
a polycarbonate block comprising carbonate units having the structure 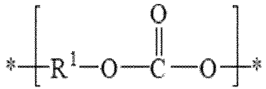
wherein at least 60 percent of the total number of R¹ groups are aromatic divalent groups;
wherein the block polyestercarbonate-polysiloxane and the block polyestercarbonate are present in a total amount of greater than 60 weight percent to 100 weight percent, based on the total weight of the build composition; and
wherein the block polyestercarbonate-polysiloxane contributes 0.3 to 1.5 weight percent of dimethylsiloxane units to the build composition, based on the total weight of the build composition; and
wherein the support structure comprises a support composition comprising a copolycarbonate comprising bisphenol isophorone carbonate units and bisphenol A carbonate units, wherein the bisphenol isophorone carbonate units have the structure 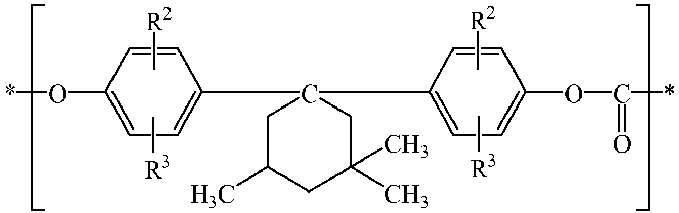 wherein R² and R³ are independently at each occurrence hydrogen or (C₁-C₁₀)-alkyl.

2. The additively manufactured article of claim 1, wherein the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is

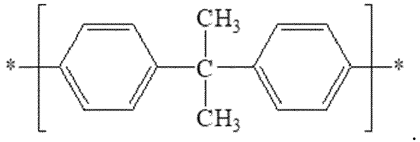

3. The additively manufactured article of claim 1 or 2, wherein the build composition comprises 1 to 80 weight percent of the block polyestercarbonate.

4. The additively manufactured article of claim 3, wherein the block polyestercarbonate comprises 70 to 90 mole percent of the resorcinol ester units, 5 to 15 mole percent of carbonate units wherein R¹ is 1,3-phenylene, and 5 to 15 mole percent of carbonate units wherein R¹ is

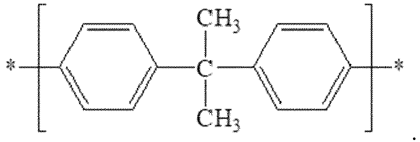

5. The additively manufactured article of any one of claims 1-4, wherein the build composition further comprises 1 to 8 weight percent of a core-shell impact modifier comprising a shell comprising poly(methyl methacrylate), and a core comprising polydimethylsiloxane, poly(butyl acrylate), or a combination thereof.

6. The additively manufactured article of any one of claims 1-5, wherein the build composition further comprises 1 to 10 weight percent of a brominated polycarbonate.

7. The additively manufactured article of any one of claims 1-6, wherein the build composition further comprises 3 to 13 weight percent of an aromatic phosphate ester.

8. The additively manufactured article of any one of claims 1-7, wherein
the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and
the support composition further comprises 15 to 45 weight percent of a bisphenol A polycarbonate, based on the total weight of the support composition.

9. The additively manufactured article of claim 1, wherein
the build composition comprises 87 to 97 weight percent of the block polyestercarbonate-polysiloxane, and the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 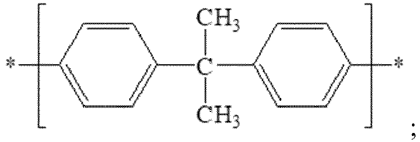 the build composition further comprises 3 to 13 weight percent of an aromatic phosphate ester;
the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and
the support composition further comprises 15 to 45 weight percent of a bisphenol A polycarbonate, based on the total weight of the support composition.

10. The additively manufactured article of claim 1, wherein
the build composition comprises 35 to 65 weight percent of the block polyestercarbonate-polysiloxane, and the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 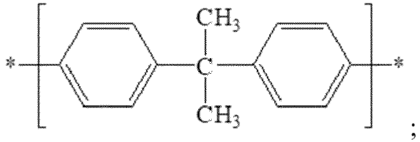 the build composition further comprises 25 to 55 weight percent of the block polyestercarbonate, and the block polyestercarbonate comprises 70 to 90 mole percent of the resorcinol ester units, 5 to 15 mole percent of carbonate units wherein R¹ is 1,3-phenylene, and 5 to 15 mole percent of carbonate units wherein R¹ is 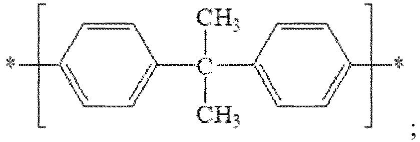 the build composition further comprises 1 to 8 weight percent of a core-shell impact modifier comprising a shell comprising poly(methyl methacrylate), and a core comprising polydimethylsiloxane, poly(butyl acrylate), or a combination thereof;
the build composition further comprises 1 to 10 weight percent of a brominated polycarbonate;
the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and
the support composition further comprises 15 to 45 weight percent of a bisphenol A polycarbonate, based on the total weight of the support composition.

11. A method of fused filament fabrication comprising:
melting a portion of a first filament to form a first thermally-solidifiable material in molten form, and dispensing the first thermally-solidifiable material in molten form in a predetermined pattern so as to define a build structure; and
melting a portion of a second filament to form a second thermally-solidifiable material in molten form, and, in coordination with the dispensing the first thermally solidifiable material, dispensing the second thermally-solidifiable material in molten form so as to define a support structure for the build structure;
wherein the first thermally-solidifiable material comprises a build composition comprising 20 to 100 weight percent of a block polyestercarbonate-polysiloxane comprising a polyester block comprising resorcinol ester units having the structure 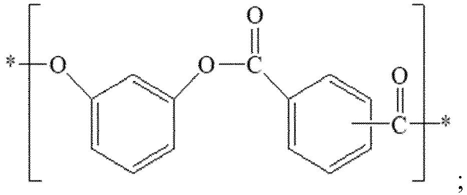
a polycarbonate block comprising carbonate units having the structure 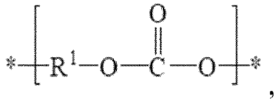 wherein at least 60 percent of the total number of R¹ groups are aromatic divalent groups;
and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene, and 5 to 35 mole percent of carbonate units wherein R¹ is 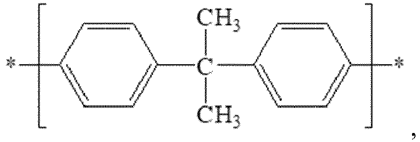 and further comprises, based on the weight of the block polyestercarbonate-polysiloxane, 0.2 to 4 weight percent dimethylsiloxane units; and
0 to 80 weight percent of a block polyestercarbonate comprising a polyester block comprising resorcinol ester units having the structure 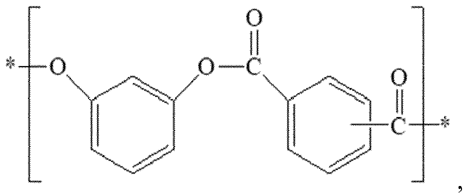 and a polycarbonate block comprising carbonate units having the structure 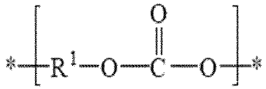 wherein at least 60 percent of the total number of R¹ groups are aromatic divalent groups;
wherein the block polyestercarbonate-polysiloxane and the block polyestercarbonate are present in a total amount of greater than 60 weight percent to 100 weight percent, based on the total weight of the build composition; and
wherein the block polyestercarbonate-polysiloxane contributes 0.3 to 0.7 weight percent of dimethylsiloxane units to the build composition, based on the total weight of the build composition; and
wherein the support structure comprises a support composition comprising a copolycarbonate comprising bisphenol isophorone carbonate units and bisphenol A carbonate units, wherein the bisphenol isophorone carbonate units have the structure 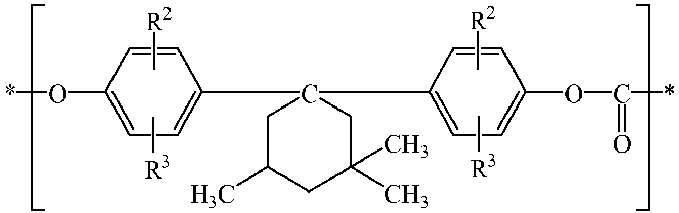 wherein R² and R³ are independently at each occurrence hydrogen or (C₁-C₁₀)-alkyl.

12. The method of claim 11, wherein the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is

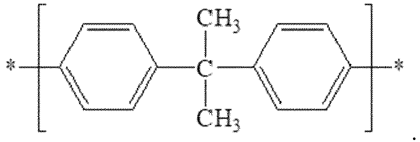

13. The method of claim 11 or 12, wherein
the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and
the support composition further comprises 15 to 45 weight percent of a bisphenol A polycarbonate, based on the total weight of the support composition.

14. The method of claim 11, wherein
the build composition comprises 87 to 97 weight percent of the block polyestercarbonate-polysiloxane, and the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 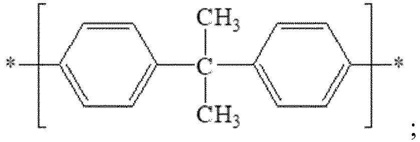 the build composition further comprises 3 to 13 weight percent of an aromatic phosphate ester;
the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and
the support composition further comprises 15 to 45 weight percent of a bisphenol A polycarbonate, based on the total weight of the support composition.

15. The method of claim 11, wherein
the build composition comprises 35 to 65 weight percent of the block polyestercarbonate-polysiloxane, and the block polyestercarbonate-polysiloxane comprises 70 to 90 mole percent of the resorcinol ester units, 5 to 15 mole percent of carbonate units wherein R¹ is 1,3-phenylene, and 5 to 15 mole percent of carbonate units wherein R¹ is 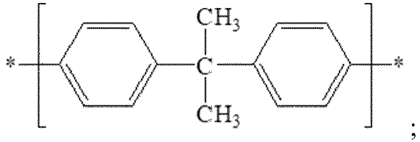 the build composition further comprises 25 to 55 weight percent of the block polyestercarbonate, and the block polyestercarbonate comprises 70 to 90 mole percent of the resorcinol ester units, 5 to 15 mole percent of carbonate units wherein R¹ is 1,3-phenylene, and 5 to 15 mole percent of carbonate units wherein R¹ is 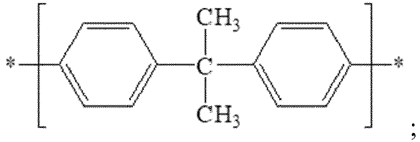 the build composition further comprises 1 to 8 weight percent of a core-shell impact modifier comprising a shell comprising poly(methyl methacrylate), and a core comprising polydimethylsiloxane, poly(butyl acrylate), or a combination thereof;
the build composition further comprises 1 to 10 weight percent of a brominated polycarbonate;
the support composition comprises 55 to 85 weight percent of the copolycarbonate, based on the total weight of the support composition; and the copolycarbonate comprises 45 to 70 mole percent bisphenol isophorone carbonate units, and 30 to 55 mole percent bisphenol A carbonate units, based on 100 mole percent total bisphenol isophorone carbonate units and bisphenol A carbonate units; and
the support composition further comprises 15 to 45 weight percent of a bisphenol A polycarbonate, based on the total weight of the support composition.
